# EUROPEAN PATENT APPLICATION

(11) **EP 4 745 796 A1**
(43) Date of publication of application: **20.05.2026**
(21) Application number: 24853748.2
(22) Date of filing: 12.08.2024
(51) Int. Cl.: G06F 16/31

(54) **METHOD AND APPARATUS FOR SEARCHING FOR OBJECT, DEVICE, AND STORAGE MEDIUM**

(30) Priority: 15.08.2023 CN 202311033821
(71) Applicant: Huawei Technologies Co., Ltd., Shenzhen, Guangdong 518129 (CN)
(72) Inventor: CHA, Junhao, Shenzhen, Guangdong 518129 (CN); ZHANG, Qintao, Shenzhen, Guangdong 518129 (CN); MA, Zhongrui, Shenzhen, Guangdong 518129 (CN)
(74) Representative: Goddar, Heinz J.
(86) International application number: PCT/CN2024/111572
(87) International publication number: WO 2025/036339

(57) **Abstract**

This application provides a method and an apparatus for searching for an object, a device, and a storage medium, relating to the field of data search technologies. The method includes obtaining a reference quantized representation for a reference object in a search input and a group of attribute values for the reference object. The method further includes selecting a group of candidate quantized representations related to the reference quantized representation from a plurality of quantized representations based on the reference quantized representation and a quantized representation index that is generated based on the plurality of quantized representations of a plurality of objects. The method further includes filtering the group of candidate quantized representations based on the group of attribute values and a group of inverted indexes of a group of partitions that are associated with the group of candidate quantized representations and that are in multiple partitions formed by the plurality of quantized representations. The method further includes returning a plurality of target objects similar to the reference object based on a group of filtered candidate quantized representations. Based on embodiments of this application, high-performance and low-latency retrieval is ensured in the case of a large data volume and a complex filtering condition.

## Description

### CROSS-REFERENCE TO RELATED APPLICATIONS

This application claims priority to Chinese Patent Application No. 202311033821.0, filed on August 15, 2023 and entitled "METHOD AND APPARATUS FOR SEARCHING FOR OBJECT, DEVICE, AND STORAGE MEDIUM", which is incorporated herein by reference in its entirety.

### TECHNICAL FIELD

Embodiments of this application mainly relate to the field of data search. More specifically, embodiments of this application relate to a method and an apparatus for searching for an object, a device, and a storage medium.

### BACKGROUND

With the wide application of the artificial intelligence (Artificial Intelligence, AI) technology, the advances in natural language processing, image processing and other technologies promote the transformation and development of the conventional retrieval field. Conventional search relies mostly on deterministic retrieval algorithms such as keyword-based retrieval. The AI technology enhances the capability of processing unstructured data and supports conversion of the unstructured data into multi-dimensional vectors. In this way, search is changed from original keyword-based retrieval to vectorized retrieval and from deterministic retrieval to similarity retrieval.

In the field of vector retrieval, a distance between vectors is typically used to represent similarity between corresponding data. In addition, in most service scenarios, beyond satisfying similarity-based retrieval, a search result further needs to meet an attribute feature filtering condition. This type of problem may be described as vector retrieval with an attribute filtering condition. However, there are still many problems to be resolved in a process of this type of vector retrieval with an attribute filtering condition.

### SUMMARY

Embodiments of this application provide a solution for searching for an object.

According to a first aspect of this application, a method for searching for an object is provided. The method for searching for an object includes obtaining a reference quantized representation for a reference object in a search input and a group of attribute values for the reference object; selecting a group of candidate quantized representations related to the reference quantized representation from a plurality of quantized representations based on the reference quantized representation and a quantized representation index that is generated based on the plurality of quantized representations of a plurality of objects; filtering the group of candidate quantized representations based on the group of attribute values and a group of inverted indexes of a group of partitions that are associated with the group of candidate quantized representations and that are in multiple partitions formed by the plurality of quantized representations, where an inverted index in the group of inverted indexes is generated based on attribute values of objects corresponding to quantized representations in a corresponding partition; and returning a plurality of target objects similar to the reference object based on a group of filtered candidate quantized representations.

In this manner, the quantized representation index is used, so that only local regions related to the plurality of quantized representations are scanned in a retrieval process to obtain the group of candidate quantized representations. In addition, when the quantized representations are filtered, only the inverted indexes of the partitions related to the local regions need to be used to calculate a reference result for filtering the quantized representations. As the data volume increases sharply, the foregoing operations enable only a small increase in the data volume of retrieval scanning, and a small increase in a quantity of partitions to be scanned correspondingly, thereby ensuring high-performance and low-latency retrieval in the case of a large data volume and a complex filtering condition.

In some embodiments, selecting the group of candidate quantized representations related to the reference quantized representation from the plurality of quantized representations includes: selecting, based on similarities between the reference quantized representation and the quantized representations in the quantized representation index, a group of similar partitions close to the reference quantized representation from similar regions formed by performing a similarity-based aggregation operation on the plurality of quantized representations; and determining quantized representations in the group of similar partitions as the group of candidate quantized representations. In this manner, some quantized representations that need to be processed can be quickly and accurately determined from the plurality of quantized representations, without processing all the quantized representations.

In some embodiments, filtering the group of candidate quantized representations includes: determining, based on the group of attribute values, a logical operation for filtering the group of candidate quantized representations; determining whether a reference result for filtering a candidate quantized representation has been calculated for a target partition that corresponds to the candidate quantized representation in the group of candidate quantized representations and that is in the group of partitions; if it is determined that the reference result has not been generated for the target partition, determining the reference result based on the logical operation and an inverted index for the target partition; and filtering the candidate quantized representations based on the reference result. In this manner, data in a local region of retrieval scanning can be quickly and accurately filtered, to ensure high-performance filtering retrieval in the case of a large data volume. As complexity of a filtering condition increases, a calculation latency of inverted filtering increases slightly, and low-latency retrieval under the complex filtering condition can be provided.

In some embodiments, filtering the group of candidate quantized representations further includes: if it is determined that the reference result has been calculated for the target partition, filtering the candidate quantized representations based on the reference result. In this manner, the reference result for filtering can be quickly obtained.

In some embodiments, the method further includes: if it is determined that the candidate quantized representation does not pass filtering, removing the candidate quantized representation from the group of candidate quantized representations. In this manner, an irrelevant quantized representation can be quickly removed, to ensure accuracy.

In some embodiments, returning the plurality of target objects similar to the reference object includes: determining a group of similarities between the reference quantized representation and the group of filtered candidate quantized representations; and selecting a plurality of target quantized representations from the group of filtered candidate quantized representations based on the group of similarities. In this manner, the plurality of target quantized representations to be retrieved can be quickly and accurately selected.

In some embodiments, selecting the plurality of target quantized representations from the group of filtered candidate quantized representations includes: sorting the group of filtered candidate quantized representations based on the group of similarities; and selecting the plurality of target quantized representations from a group of sorted candidate quantized representations. In this manner, the plurality of target quantized representations to be retrieved can be quickly and accurately selected.

In some embodiments, the method further includes: performing a similarity-based aggregation operation on the plurality of quantized representations based on a similarity between the plurality of quantized representations; and generating the quantized representation index based on a plurality of quantized representations on which similarity-based aggregation is performed. In this manner, the quantized representation index can be quickly generated, and efficiency of quantized representation retrieval can be improved.

In some embodiments, the method further includes: performing a clustering operation on the plurality of quantized representations based on the similarity between the plurality of quantized representations to determine the multiple partitions; and determining, based on a group of quantized representations in each of the multiple partitions, an inverted index of attribute values of a group of objects corresponding to the group of quantized representations. In this manner, an inverted index for a partition can be quickly and accurately generated, and a calculation amount in a retrieval filtering process can be reduced.

In some embodiments, each of the multiple partitions includes an identifier of an object, a quantized representation of the object, and an offset location of the quantized representation of the object in the partition. In this manner, information in a partition can be quickly determined.

In some embodiments, the method further includes: generating, for each of the multiple objects, a mapping relationship between the identifier of the object, and the partition in which the quantized representation of the object is located and the offset location in the partition. In this manner, the partition in which the quantized representation of the object is located and the location in the partition can be quickly determined by using the identifier of the object.

In some embodiments, determining the inverted index of the attribute values of the group of objects corresponding to the group of quantized representations includes: obtaining the group of quantized representations in the partition; obtaining the attribute values of the group of objects based on identifiers of the group of objects corresponding to the group of quantized representations; and establishing the inverted index based on the attribute values of the group of objects. In this manner, an inverted index for a partition can be quickly generated, and a calculation amount in a retrieval filtering process can be reduced.

According to a second aspect of this application, an apparatus for searching for an object is provided. The apparatus for searching for an object includes a reference quantized representation and attribute value obtaining unit, configured to obtain a reference quantized representation for a reference object in a search input and a group of attribute values for the reference object; a candidate quantized representation selection unit, configured to select a group of candidate quantized representations related to the reference quantized representation from a plurality of quantized representations based on the reference quantized representation and a quantized representation index that is generated based on the plurality of quantized representations of a plurality of objects; a quantized representation filtering unit, configured to filter the group of candidate quantized representations based on the group of attribute values and a group of inverted indexes of a group of partitions that are associated with the group of candidate quantized representations and that are in multiple partitions formed by the plurality of quantized representations, where an inverted index in the group of inverted indexes is generated based on attribute values of objects corresponding to quantized representations in a corresponding partition; and a target object returning unit, configured to return a plurality of target objects similar to the reference object based on a group of filtered candidate quantized representations.

In some embodiments, the candidate quantized representation selection unit includes: an aggregation selection unit, configured to select, based on similarities between the reference quantized representation and the quantized representations in the quantized representation index, a group of similar partitions close to the reference quantized representation from similar regions formed by performing a similarity-based aggregation operation on the plurality of quantized representations; and a candidate quantized representation determining unit, configured to determine quantized representations in the group of similar partitions as the group of candidate quantized representations.

In some embodiments, the quantized representation filtering unit includes: a logical operation determining unit, configured to: determine, based on the group of attribute values, a logical operation for filtering the group of candidate quantized representations; a partition filtering determining unit, configured to: determine whether a reference result for filtering a candidate quantized representation has been calculated for a target partition that corresponds to the candidate quantized representation in the group of candidate quantized representations and that is in the group of partitions; a reference result determining unit, configured to: if it is determined that the reference result has not been generated for the target partition, determine the reference result based on the logical operation and an inverted index for the target partition; and a first filtering unit, configured to filter the candidate quantized representations based on the reference result.

In some embodiments, the quantized representation filtering unit further includes: a second filtering unit, configured to: if it is determined that the reference result has been calculated for the target partition, filter the candidate quantized representations based on the reference result.

In some embodiments, the apparatus further includes: a removal unit, configured to: if it is determined that the candidate quantized representation does not pass filtering, remove the candidate quantized representation from the group of candidate quantized representations.

In some embodiments, the target object returning unit includes: a similarity determining unit, configured to determine a group of similarities between the reference quantized representation and the group of filtered candidate quantized representations; and a unit for selecting a plurality of target quantized representations, configured to select a plurality of target quantized representations from the group of filtered candidate quantized representations based on the group of similarities.

In some embodiments, the unit for selecting a plurality of target quantized representations includes: a sorting unit, configured to sort the group of filtered candidate quantized representations based on the group of similarities; and a quantized representation selection unit, configured to select the plurality of target quantized representations from a group of sorted candidate quantized representations.

In some embodiments, the apparatus further includes: a similarity-based aggregation operation unit, configured to perform a similarity-based aggregation operation on the plurality of quantized representations based on a similarity between the plurality of quantized representations; and a quantized representation index generation unit, configured to generate the quantized representation index based on a plurality of quantized representations on which similarity-based aggregation is performed.

In some embodiments, the apparatus further includes: a unit for determining multiple partitions, configured to perform a clustering operation on the plurality of quantized representations based on the similarity between the plurality of quantized representations to determine the multiple partitions; and an inverted index determining unit, configured to determine, based on a group of quantized representations in each of the multiple partitions, an inverted index of attribute values of a group of objects corresponding to the group of quantized representations.

In some embodiments, each of the multiple partitions includes an identifier of an object, a quantized representation of the object, and an offset location of the quantized representation of the object in the partition.

In some embodiments, the apparatus further includes: a mapping relationship generation unit, configured to generate, for each of the multiple objects, a mapping relationship between the identifier of the object, and the partition in which the quantized representation of the object is located and the offset location in the partition.

In some embodiments, the inverted index determining unit includes: a quantized representation obtaining unit, configured to obtain the group of quantized representations in the partition; an object attribute value obtaining unit, configured to obtain the attribute values of the group of objects based on identifiers of the group of objects corresponding to the group of quantized representations; and an inverted index establishment unit, configured to establish the inverted index based on the attribute values of the group of objects.

According to a third aspect of this application, an electronic device is further provided, including at least one calculation unit and at least one memory, where the at least one memory is coupled to the at least one calculation unit and stores instructions for execution by the at least one calculation unit, and when executed by the at least one calculation unit, the instructions enable the device to perform the method according to the first aspect of this application.

According to a fourth aspect of this application, a computer-readable storage medium is further provided, where a computer program is stored on the computer-readable storage medium, and when the program is executed by a processor, the method according to the first aspect of this application is implemented.

According to a fifth aspect of this application, a computer program product is further provided, including computer-executable instructions, and when the computer-executable instructions are executed by a processor, the method according to the first aspect of this application is implemented.

It may be understood that the apparatus according to the second aspect, the electronic device according to the third aspect, the computer storage medium according to the fourth aspect, or the computer program product according to the fifth aspect is configured to perform the method according to the first aspect. Therefore, the explanations or descriptions of the first aspect are also applicable to the second aspect, the third aspect, the fourth aspect, and the fifth aspect. In addition, for beneficial effect that can be achieved in the second aspect, the third aspect, the fourth aspect, and the fifth aspect, refer to the beneficial effects in the corresponding method. Details are not described herein again.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a diagram of an example environment in which a plurality of embodiments of this application can be implemented;
FIG. 2 is a diagram of an example process in which a plurality of embodiments of this application can be implemented;
FIG. 3 is a diagram of an example implementation architecture according to some embodiments of this application;
FIG. 4A and FIG. 4B are a diagram of a schematic process of constructing a joint index according to some embodiments of this application;
FIG. 5A and FIG. 5B are a diagram of an example of online joint retrieval according to some embodiments of this application;
FIG. 6 is a schematic flowchart for retrieving an object according to some embodiments of this application;
FIG. 7 is a schematic flowchart of constructing a vector index according to some embodiments of this application;
FIG. 8 is a schematic flowchart of constructing an inverted index according to some embodiments of this application;
FIG. 9 is a schematic flowchart of parsing a filtering condition according to some embodiments of this application;
FIG. 10 is a schematic flowchart of retrieving a similar vector according to some embodiments of this application;
FIG. 11 is a block diagram of an apparatus according to some embodiments of this application; and
FIG. 12 is a block diagram of a compute device that can implement a plurality of embodiments of this application.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

As described above, in most service scenarios, a search result further needs to meet an attribute feature filtering condition under the premise of a similarity search. To implement vector search with an attribute feature filtering condition for a particular object, in a conventional scheme, inverted filtering is first performed, and then retrieval is performed. Specifically, in the method, it is first determined whether a request carries a filtering condition. If the request carries the filtering condition, an inverted index for all vectors is used to complete filtering operation, to obtain vectors that meet the filtering condition. Then, during vector scanning, if a filtering condition exists, it is first determined, by using a previously calculated filtering result, whether a vector meets the filtering condition, and then similarity is calculated for the vector that meets the filtering condition. If no filtering condition exists, the similarity is directly calculated. This method can effectively implement an attribute value filtering function, but with the increase of a total quantity of vectors, an inverted list of attribute values increases accordingly. Because condition filtering operation based on the inverted list needs to be completed for all vectors, a time of filtering calculation continuously increases with the increase of the quantity of vectors, and consequently, an entire retrieval latency increases continuously. Therefore, in the case of large-scale data, a filtering operation on full data causes an excessive latency, which does not meet a service performance requirement.

Another conventional scheme is to encode tags, and apply filtering during retrieval. Specifically, in this scheme, it is determined whether a request carries a filtering condition, and if the request carries the filtering condition, a scalar value in the filtering condition is encoded. During vector scanning, if a filtering condition exists, filtering calculation is completed by using an encoded value previously calculated and an encoded value in a scalar index, and then a similarity is calculated for a vector that meets the filtering condition. If no filtering condition exists, the similarity is directly calculated. Scalar attribute values need to be encoded. Therefore, it is required that a quantity of the attribute values is limited and the attribute values can be enumerated. This limits the application scope of the filtering function. In addition, as complexity of the filtering condition increases, a calculation amount of determining whether each vector meets the filtering condition increases continuously, resulting in a significant increase in a retrieval latency. This scheme can ensure that the retrieval latency does not increase as the data volume increases. However, as complexity of the filtering condition increases, the retrieval latency increases greatly.

To resolve at least some of the foregoing problems and other potential problems, in embodiments of this application, a compute device first obtains a reference quantized representation for a reference object in a search input and a group of attribute values for the reference object. Then, the compute device determines a group of candidate quantized representations related to the reference quantized representation by using the reference quantized representation and a quantized representation index that is generated based on a plurality of quantized representations of a plurality of objects. Next, the compute device filters the group of candidate quantized representations based on the group of attribute values in combination with a group of inverted indexes of a group of partitions that are associated with the group of candidate quantized representations and that are in multiple partitions formed by the plurality of quantized representations. Finally, the compute device may return a plurality of target objects similar to the reference object based on a plurality of target quantized representations selected in a group of filtered candidate quantized representations. In this manner, the quantized representation index is used, so that only local regions related to the plurality of quantized representations are scanned in a retrieval process to obtain the group of candidate quantized representations. In addition, when the quantized representations are filtered, only the inverted indexes of the partitions related to the local regions need to be used to calculate a reference result for filtering the quantized representations. As the data volume increases sharply, the foregoing operations enable only a small increase in the data volume of retrieval scanning, and a small increase in a quantity of partitions to be scanned correspondingly, thereby ensuring high-performance and low-latency retrieval in the case of a large data volume and a complex filtering condition.

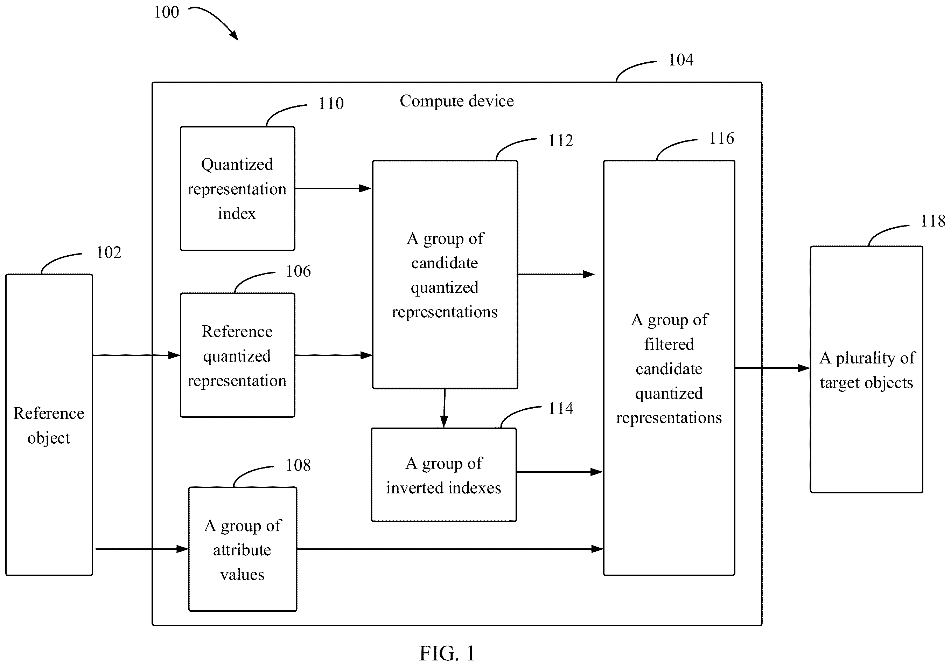

The following further describes embodiments of this application with reference to the accompanying drawings. FIG. 1 is a diagram of an example environment 100 in which a plurality of embodiments of this application can be implemented. As shown in FIG. 1, the example environment 100 includes a compute device 104. The compute device 104 includes but is not limited to an in-vehicle compute device, a personal computer, a server, a handheld or laptop device, a mobile device, a multi-processor system, a consumer electronic product, a small computer, a large computer, a distributed computing environment including any one of the foregoing system or devices, and the like.

The compute device 104 may be configured to provide a search service for a user. After the user enters a reference object 102, a plurality of target objects 118 similar to the reference object 102 may be provided for the user, for the user to view or use. The reference object 102 entered by the user may be any proper data information. In some embodiments, the reference object 102 may be a picture. For example, the user enters a picture to search for a picture similar to content in the picture, for example, uses a picture including a dog to search for a picture similar to the dog in the picture. In some embodiments, the reference object 102 may be text information. The user enters a text to search for information similar to or related to the entered text. For example, if the user enters to search for an application, the reference object may be a name of the application. If the user wants to search for some information, the reference object may be some keywords entered by the user. In some embodiments, the reference object may be an audio clip that the user wants to retrieve, or the like. The foregoing example is merely used to describe the present disclosure rather than a specific limitation on the present disclosure. The reference object may be any proper input information that the user wants to retrieve.

As shown in FIG. 1, the compute device 104 processes the reference object entered by the user to generate a reference quantized representation 106 corresponding to the reference object, for example, a vector corresponding to the reference object. FIG. 1 shows that the compute device 104 receives the reference object 102, and then the compute device generates the reference quantized representation 106 corresponding to the reference object 102. This is merely an example rather than a specific limitation on the present disclosure. In another example, the reference quantized representation 106 of the reference object 102 is obtained by another compute device, and then the compute device 104 receives the reference quantized representation 106 of the reference object 102 from the another device.

In FIG. 1, in addition to obtaining the reference quantized representation 106 of the reference object 102, the compute device 104 further receives a group of attribute values 108 of the reference object 102 if some attribute information further needs to be used to filter the reference object in a retrieval process, where the group of attribute values may be used as a tag of the reference object. In some embodiments, the group of attribute values 108 is obtained by the reference object entered by the user. For example, when the reference object entered by the user is a picture of a dog, not only a quantized representation of the picture is generated, but also an image content tag may be added and set to a dog. In another example, the group of attribute values is some directional information collected by the compute device when the user enters the reference object, and is used as attribute information of the reference object, for example, information such as a region of an object that is expected to be searched for and a use age of the object. The foregoing example is merely used to describe the present disclosure rather than a specific limitation on the present disclosure.

The compute device 104 may also obtain a pre-generated quantized representation index 110 for a plurality of to-be-retrieved quantized representations of a plurality of objects in a target library. The quantized representation index 110 is constructed by using a vector aggregation algorithm for the plurality of quantized representations of the plurality of objects in the target library. For example, an inverted file (Inverted File, IVF) clustering algorithm or a graph aggregation algorithm is used to perform a similarity-based aggregation operation on the plurality of quantized representations to generate the quantized representation index for searching for the plurality of quantized representations. In an example, the quantized representation index is a vector index. Then, the compute device searches the quantized representation index 110 for a group of similar partitions similar to the reference quantized representation 106 by using the obtained reference quantized representation 106 in similar regions generated by the foregoing similarity-based aggregation algorithm for the plurality of quantized representations. Then, quantized representations in the group of similar partitions are used as a group of candidate quantized representations 112. In one example, if the vector aggregation algorithm is the IVF clustering algorithm, a group of similar partitions is selected from multiple partitions generated by processing the plurality of quantized representations by using the IVF clustering algorithm. In another example, if the vector aggregation algorithm is the graph aggregation algorithm, the group of similar partitions is some regions in a graph formed by processing the plurality of quantized representations by using the graph aggregation algorithm. The foregoing example is merely used to describe the present disclosure rather than a specific limitation on the present disclosure.

In addition, the compute device 104 may also obtain information about the multiple partitions related to the plurality of quantized representations of the plurality of objects in the target library and an inverted index of attribute values corresponding to each of the multiple partitions. The multiple partitions are obtained by using a vector partitioning aggregation algorithm, for example, the IVF clustering algorithm, for the plurality of quantized representations of the plurality of objects. The operation may be performed on the compute device 104, or may be performed on another compute device, and then the compute device 104 obtains the multiple partitions obtained by using the partitioning aggregation algorithm. Each partition may include an identifier of each object located in the partition, a quantized representation of the object, and an offset location of the quantized representation in the partition. Attribute values of the corresponding object may be obtained by using the identifier of the object in the partition, and then an inverted index for each partition is generated by using the attribute values. For example, the inverted index includes the attribute values and offset locations of quantized representations of objects having the attribute values in the partition. The foregoing example is merely used to describe the present disclosure rather than a specific limitation on the present disclosure. The inverted index may further include any proper information.

Next, the compute device 104 needs to filter the group of candidate quantized representations 112, to determine whether each candidate quantized representation in the group of candidate quantized representations meets a requirement of a group of attribute values of the input reference object. If the candidate quantized representation meets the requirement of a group of attribute values of the input reference object, it indicates that the candidate quantized representation passes filtering. If the candidate quantized representation does not meet the requirement of a group of attribute values of the input reference object, it indicates that the candidate quantized representation does not pass filtering, and the quantized representation is removed from the group of candidate quantized representations. Specifically, when the group of candidate quantized representations is filtered, the group of attribute values 108 and a group of inverted indexes 114 of a group of partitions corresponding to the group of candidate quantized representations need to be used to perform a filtering operation on the group of candidate quantized representations 112. A group of filtered candidate quantized representations 116 is generated after the group of candidate quantized representations 112 is filtered. Then, a plurality of target quantized representations are selected from the group of filtered candidate quantized representations 116. For example, a plurality of target quantized representations with high similarities are selected based on similarities between the quantized representation of the reference object and quantized representations in the group of filtered candidate quantized representations. Then, a plurality of corresponding target objects 118 may be obtained based on the plurality of target quantized representations, and be returned to the user or another compute device.

In this manner, the quantized representation index is used, so that only local regions related to the plurality of quantized representations are scanned in a retrieval process to obtain the group of candidate quantized representations. In addition, when the quantized representations are filtered, only the inverted indexes of the partitions related to the local regions need to be used to calculate a reference result for filtering the quantized representations. As the data volume increases sharply, the foregoing operations enable only a small increase in the data volume of retrieval scanning, and a small increase in a quantity of partitions to be scanned correspondingly, thereby ensuring high-performance and low-latency retrieval in the case of a large data volume and a complex filtering condition.

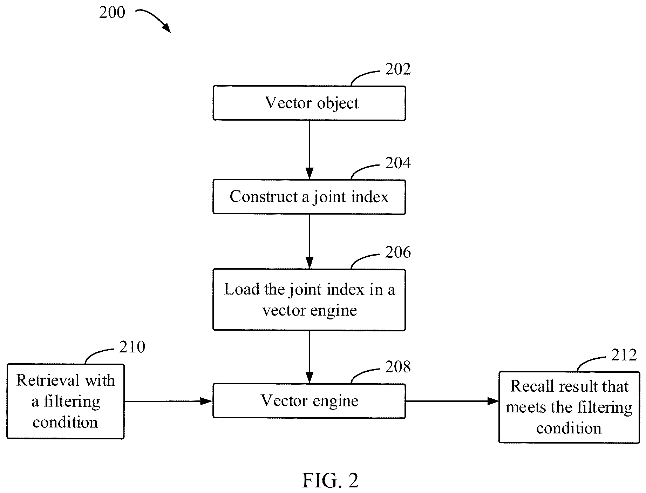

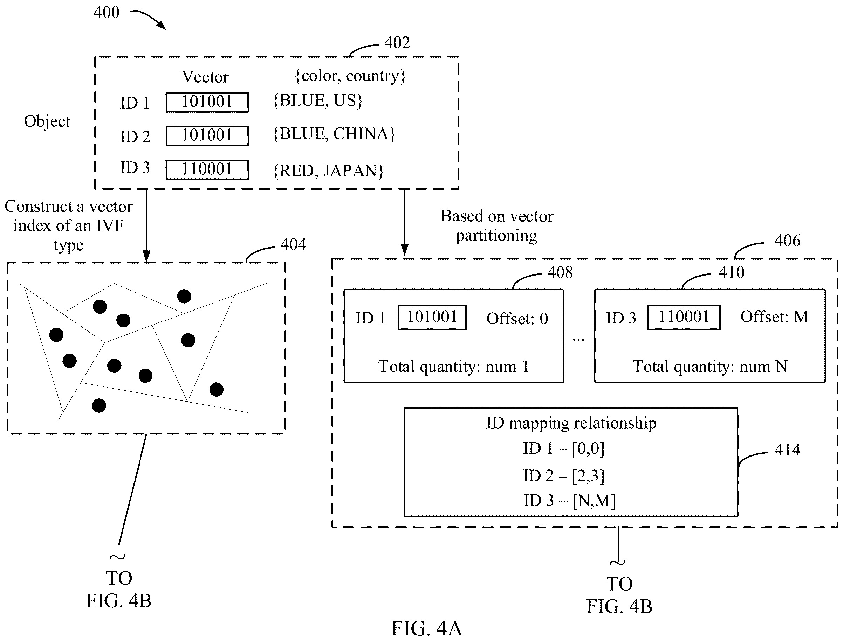

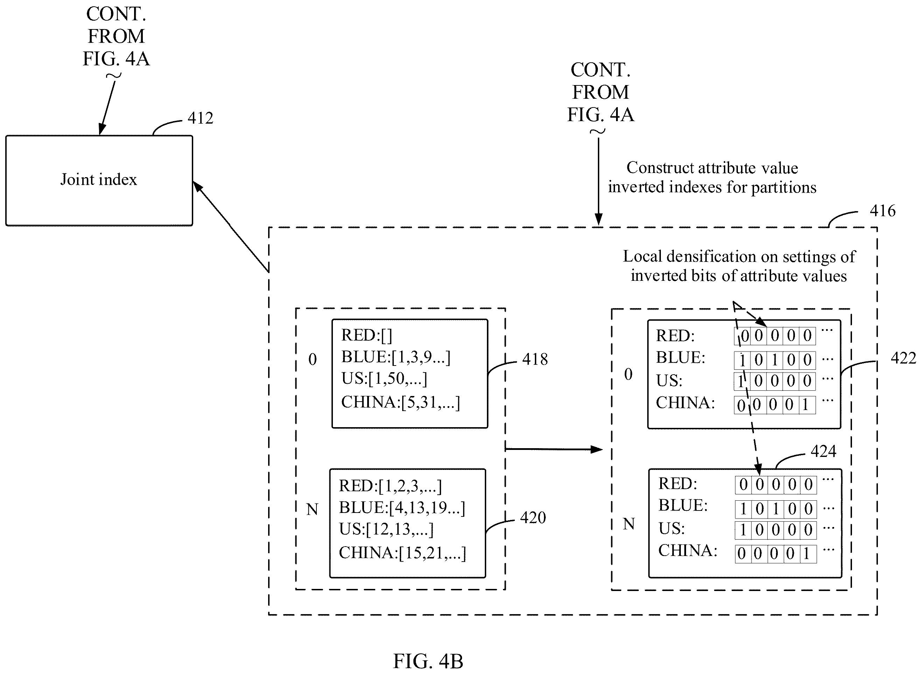

The foregoing describes, with reference to FIG. 1, a diagram of the example environment 100 in which embodiments of this application can be implemented. The following describes, with reference to FIG. 2, a diagram of an example process 200 in which a plurality of embodiments of this application can be implemented. In this example process, a quantized representation of an object is a vector of the object. As shown in FIG. 2, before vector retrieval is performed, a vector object in a database or a repository needs to be processed to construct a joint index. Then, when vector retrieval is performed, a proper vector is found by using the constructed joint index. Specifically, a vector object 202 to be used to construct the joint index is first determined. In some embodiments, the vector object 102 includes an identifier of the object, a vector of the object, and attribute values of the object. Further, the vector of the object is obtained by processing information of the vector object. For example, feature extraction, feature encoding, and related processing are performed on some objects to obtain vectors of the objects. Next, at block 204, the joint index is constructed for retrieval. For a process of constructing the joint index, refer to the description of FIG. 4A and FIG. 4B. After the joint index is constructed and before retrieval is actually performed, the joint index is loaded in a vector engine at block 206. In this case, the compute device may store the joint index locally for quick retrieval. The foregoing operation process is mainly performed before retrieval is performed. The operation described below is an online retrieval process. At block 210, the compute device performs retrieval with a filtering condition. For example, through retrieval, a vector of an object entered by the user and an attribute value of the object entered by the user can both be obtained. The attribute value may be used as a tag of the object. For example, when an image with a dog is input, after processing, the dog identified from the image may be used as an attribute value or a tag of the image. Then, retrieval is performed by using a vector engine 208. The vector engine has loaded the joint index. The vector engine 208 performs retrieval by using the joint index, the vector of the input object, and the attribute value that is used as the filtering condition. Then, a recall result that meets the filtering condition is determined at block 212. In this manner, the recall result that meets the filtering condition can be quickly obtained by using the joint index. In addition, when the data volume increases, high-performance filtering retrieval can also be performed, and low-latency retrieval can be provided under a complex filtering condition.

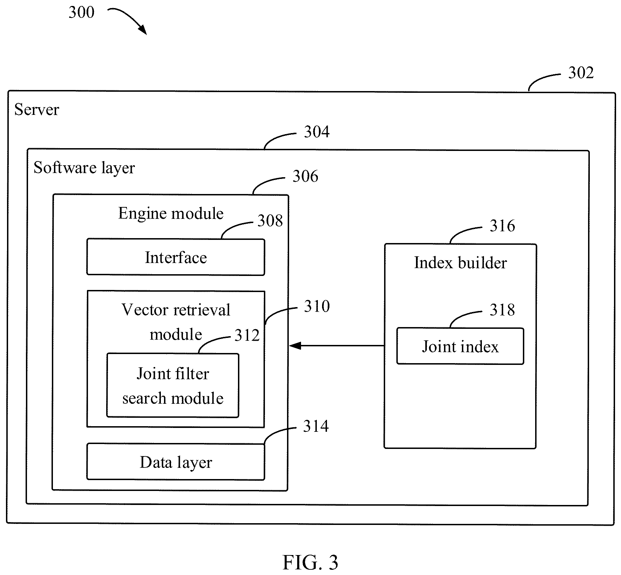

The foregoing describes, with reference to FIG. 2, a diagram of a specific example environment in which a plurality of embodiments of this application can be implemented. The following describes, with reference to FIG. 3, a diagram of an example implementation architecture 300 according to some embodiments of this application. As shown in FIG. 3, the technical solutions of this application may be implemented in a server 302. The server 302 includes a software layer 304, and the software layer 304 includes software and applications to which the server may be applied. An engine module 306 is located at the software layer 304, and serves as an online retrieval service component for a vector engine. The engine module 306 mainly processes an online retrieval request, and includes an interface 308. The interface 308 is configured to receive the online retrieval request. The engine module 306 further includes a vector retrieval module 310, configured to complete joint index loading. The engine module 306 further includes a data layer 314, configured to store a joint index 318, and the vector retrieval module 310 completes filtering retrieval by using a joint filter search module 312. An index builder 316 mainly processes construction of the joint index 318, where the joint index includes an attribute value inverted index and a vector index. Optionally, the index builder 316 provides an offline index construction service for the vector engine.

The foregoing describes, with reference to FIG. 3, a diagram of an example implementation architecture according to some embodiments of this application. The following describes, with reference to FIG. 4A and FIG. 4B, a diagram of a schematic process 400 of constructing a joint index according to some embodiments of this application. As shown in FIG. 4A and FIG. 4B, each piece of object information in object information 402 includes an identifier (ID) of an object, a vector value of the object, and attribute values (color: red, country: us) of the object. The attribute values of the object may also be referred to as scalar values of the object. Then, the object information 402 may be used to construct a joint index, where the joint index includes a vector index and an attribute value inverted index that is based on vector clustering information. A vector index 404 may be constructed by using vector values of objects in the object information 402. As shown in FIG. 4A and FIG. 4B, the vector index 404 is constructed by using a general vector algorithm (an IVF clustering algorithm or a graph aggregation algorithm). Similar vectors are aggregated together by using the vector algorithm, so that a similar partition similar to a target vector is quickly found during retrieval, and the similar partition is traversed. As shown in FIG. 4A and FIG. 4B, the vector index 404 is obtained by using the IVF clustering algorithm, and therefore includes multiple partitions, and vectors in each partition are similar. When a similar vector is searched for by using the vector index, a vector of an input reference object may be first compared with a vector at a center point in each partition, then several partitions with close distances are found, and each vector in these partitions is traversed. Partitions formed by using the IVF algorithm that are shown in FIG. 4A and FIG. 4B are merely an example, and are not a specific limitation on the present disclosure. In another embodiment, vectors of objects may be aggregated by using another vector algorithm to generate a vector index. In this case, the vectors are not divided into partitions, and an association relationship is used between the vectors to indicate a similarity degree. In this case, when the target vector related to a reference vector of a reference object is searched for, vector association relationship regions for all objects may be searched for a similar region similar to the reference vector as a similar partition. Then, vectors in the similar partition are traversed.

As shown in FIG. 4A and FIG. 4B, a plurality of attribute value inverted indexes 416 may be further generated. For the vectors in the object information, similarity-based aggregation is performed on the vectors by using a vector aggregation partitioning algorithm (IVF type) to generate multiple partitions 406, where the multiple partitions 406 include a partition 0 408, ..., and a partition n 410. Based on the multiple partitions 406, a mapping relationship 414 including identifiers (ID) of the objects may be further generated, where the mapping relationship 414 includes the identifiers of the objects and partitions in which vectors of the objects are located and offset locations in the partitions. For example, the mapping relationship includes an identifier ID of the object- [partition number, offset location in the partition]. Then, attribute values of objects in each partition may be used to construct a plurality of attribute value inverted indexes 416 for the multiple partitions.

In FIG. 4A and FIG. 4B, the partition 0 has an attribute value inverted index 418. In the attribute value inverted index 418, for an attribute value RED[], it indicates that there is no vector whose attribute value is RED in the partition, and for an attribute value BLUE[1, 3, 9...], it indicates that an object corresponding to a vector at an offset location such as 1, 3, or 9 in the partition has an attribute value BLUE. The partition N has an inverted list 420. Local densification processing may also be performed on the inverted lists. Each attribute value includes a quantity of bits that is the same as a quantity of vectors in the partition. If an object of a vector at an offset location in the partition has the attribute value, a value at a corresponding bit is set to 1; and otherwise, the value is set to 0. Corresponding inverted lists 422 and 424 may be obtained after densification processing. The generated vector index 404 and the plurality of attribute value inverted indexes 416 together form a joint index 412 for retrieval.

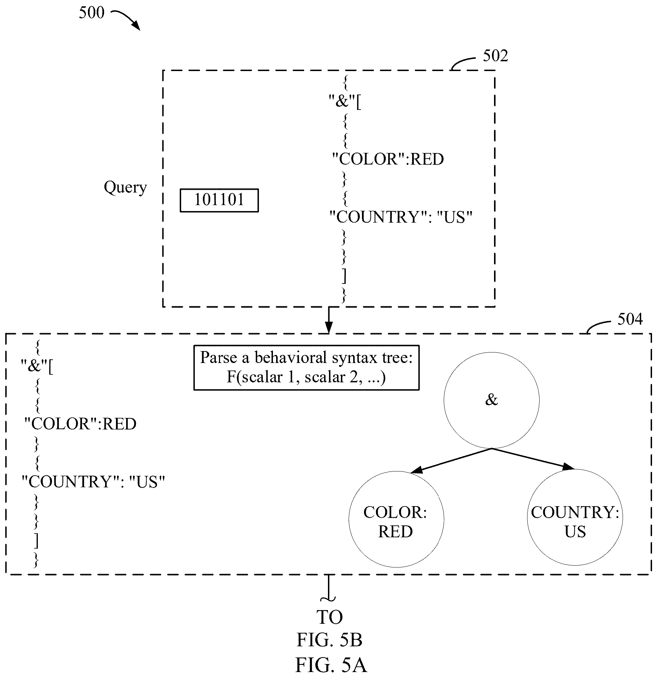

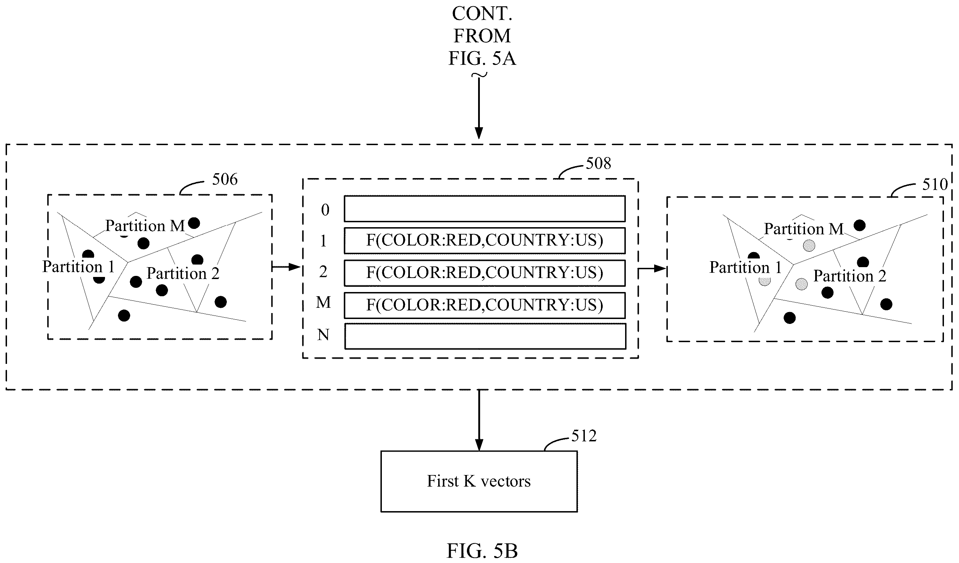

The foregoing describes, with reference to FIG. 4A and FIG. 4B, a diagram of a schematic process of constructing a joint index according to some embodiments of this application. The following describes, with reference to FIG. 5A and FIG. 5B, a diagram of an example of online joint retrieval according to some embodiments of this application. In FIG. 5A and FIG. 5B, a query 502 with filtering includes a query vector for a reference object, and attribute value filtering conditions. For example, the query vector is 101101 with attribute value filtering conditions "COLOR:RED" and "COUNTRY:US", and a relationship between the two attribute values is an AND relationship. It indicates that a found object needs to have both "COLOR:RED" and "COUNTRY:US". Then, the attribute value filtering conditions in the query are parsed in block 504 to obtain a corresponding logical operation F (scalar 1, scalar 2...), where scalar 1 and scalar 2 represent corresponding attribute values, and the logical operation F performs an AND operation on "COLOR:RED" and "COUNTRY:US". Next, in a vector retrieval process, a vector index 506 is first searched for a vector similar to a reference vector. Then, for each vector found from the vector index, it is determined whether a logical operation has been completed on a partition corresponding to the vector. If the logical operation has not been completed on the partition, a reference result that meets the filtering conditions in the partition is calculated by using F(scalar 1, scalar 2...) and an inverted list of the partition. For example, inverted information with the attribute values scalar 1 and scalar 2 is found from the attribute value inverted index of the partition, and then a logical operation is performed on the obtained inverted information, for example, an AND operation, an OR operation, or various combination operations, to obtain the reference result for filtering. The reference result includes information about vectors at which offset locations in the partition meet the attribute value filtering conditions. Then, the reference result may be used to determine whether the vector meets the filtering conditions. As shown in FIG. 4A and FIG. 4B, three partitions 1, 2, and M are determined from multiple partitions 508 by using the vector index, and a filtering logical operation is applied to the three partitions. Then, as shown in block 510, light-colored dots in the three partitions are filtered out, and dark-colored dots are retained as filtered points. Then, for vectors that meet the filtering conditions, distances between the vectors and the reference vector are calculated, and the most similar k vector values 512 are returned.

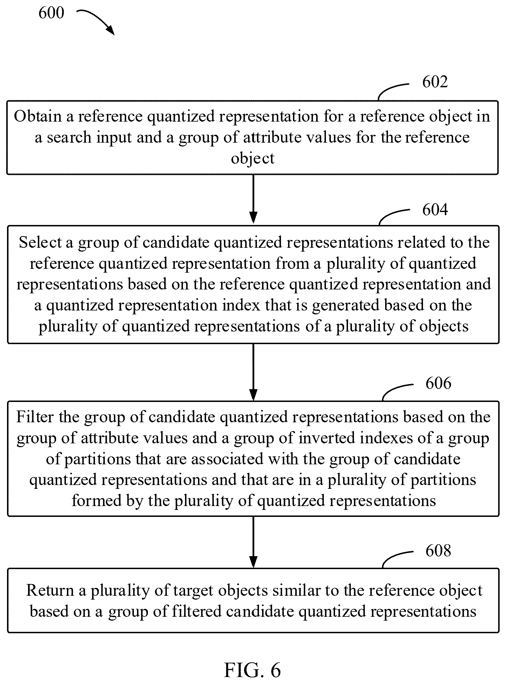

The foregoing describes, with reference to FIG. 5A and FIG. 5B, a diagram of an example of online joint retrieval according to some embodiments of this application. The following describes, with reference to FIG. 6, a schematic flowchart 600 for retrieving an object according to some embodiments of this application. The method shown in FIG. 6 may be performed by the compute device 104 in FIG. 1 or any proper compute device.

As shown in FIG. 6, at block 602, a reference quantized representation for a reference object in a search input and a group of attribute values for the reference object are obtained. As shown in FIG. 1, information about the reference object 102 is included in the search input of a user, and then the reference quantized representation 106 of the reference object 102 may be obtained at the compute device 104 or from another compute device. In an example, feature extraction may be performed on the object, and then an extracted feature is encoded and converted into a vector feature. In another example, the object is directly mapped to a vector. For example, the object is a text, and a vector of the text is generated based on a vector corresponding to each word in the text. The foregoing example is merely used to describe the present disclosure rather than a specific limitation on the present disclosure. A person skilled in the art may obtain the reference quantized representation of the reference object in any proper manner.

For a search that needs filtering by using attribute values, a group of attribute values of the reference object that are used for filtering also needs to be obtained. The group of attribute values is information associated with the reference object to be searched for, and may be used as a tag of the reference object. For example, the group of attribute information may be obtained from the reference object, or may be determined based on information collected by the compute device, for example, information such as a search region range and an age of the user who enters the search object. If the object to be searched for does not need to be filtered, the group of attribute values of the reference object does not need to be obtained.

A block 604, a group of candidate quantized representations related to the reference quantized representation are selected from a plurality of quantized representations based on the reference quantized representation and a quantized representation index that is generated based on the plurality of quantized representations of a plurality of objects. For example, the compute device 104 obtains a group of candidate quantized representations 110 based on the quantized representation 106 and the quantized representation index that is generated based on the plurality of quantized representations of the plurality of objects.

In some embodiments, the quantized representation index is generated by the compute device 104. Additionally, the generation process may be performed offline by the compute device 104. In the generation process, the compute device 104 first calculates a similarity between the quantized representations. In an example, the similarity is represented by a distance between the quantized representations. In another example, the similarity is represented by a cosine similarity between the quantized representations. The foregoing example is merely used to describe the present disclosure rather than a specific limitation on the present disclosure. A person skilled in the art may calculate the similarity between the vectors in any proper manner. Then, a similarity-based aggregation operation is performed on the plurality of quantized representations based on the similarity between the plurality of quantized representations. Next, the compute device generates the quantized representation index based on a plurality of quantized representations on which similarity-based aggregation is performed. In some embodiments, the compute device may perform the similarity-based aggregation operation on the plurality of quantized representations by using an inverted file clustering algorithm or a graph aggregation algorithm, to generate the quantized representation index for searching for the plurality of quantized representations. In some embodiments, the quantized representation index is generated by another compute device in the foregoing manner, and is obtained by the compute device 104. The foregoing example is merely used to describe the present disclosure rather than a specific limitation on the present disclosure.

In some embodiments, after the quantized representation index is obtained, when the group of candidate quantized representations related to the reference quantized representation is selected from the plurality of quantized representations, a group of similar partitions close to the reference quantized representation may be first selected, based on similarities between the reference quantized representation and the quantized representations in the quantized representation index, from similar regions formed by performing the similarity-based aggregation operation on the plurality of quantized representations. Then, quantized representations in the group of similar partitions are determined as the group of candidate quantized representations. In some embodiments, when the quantized representation index is obtained by using the inverted file clustering algorithm, a similarity between the reference quantized index and a central quantized representation of each partition generated through inverted file clustering may be first calculated. Then, a predetermined quantity of partitions with high similarities are selected from the multiple partitions generated through inverted file clustering. Then, the quantized representations in the predetermined quantity of partitions with high similarities are used as the group of candidate quantized representations. In some embodiments, when the quantized representation index is implemented by using the graph aggregation algorithm, corresponding similar partitions may be found by calculating similarities between the reference quantized representation and the quantized representations in the similar regions implemented by the graph aggregation algorithm. Then, the quantized representations in the found similar partitions are determined as the group of candidate quantized representations. The foregoing example is merely used to describe the present disclosure rather than a specific limitation on the present disclosure. A person skilled in the art may determine the group of candidate quantized representations related to the reference quantized representation based on the quantized representation index in any proper manner.

At block 606, the group of candidate quantized representations is filtered based on the group of attribute values and a group of inverted indexes of a group of partitions that are associated with the group of candidate quantized representations and that are in the multiple partitions formed by the plurality of quantized representations. An inverted index in the group of inverted indexes is generated based on attribute values of objects corresponding to quantized representations in a corresponding partition. For example, the compute device 104 filters the group of candidate quantized representations 112 by using the group of inverted indexes 114 obtained by using the group of candidate quantized representations, and then in combination with a group of attribute values 108 of the reference object 102, to generate a group of filtered candidate quantized representations 116.

In some embodiments, the compute device 104 may generate the multiple partitions based on the plurality of quantized representations of the plurality of objects in an object library. Specifically, the compute device performs a clustering operation on the plurality of quantized representations based on the similarity between the plurality of quantized representations of the plurality of objects, to determine the multiple partitions. For example, the plurality of quantized representations of the plurality of objects may be processed by using the inverted file clustering algorithm to generate the multiple partitions. For example, each of the multiple partitions may include: an identifier of an object, a quantized representation of the object, and an offset location of the quantized representation of the object in the partition. The foregoing example is merely used to describe the present disclosure rather than a specific limitation on the present disclosure. Each partition may include any proper information. Then, the compute device 104 may further determine, based on a group of quantized representations in each of the multiple partitions, an inverted index of attribute values of a group of objects corresponding to the group of quantized representations. Specifically, when determining an inverted index of attribute values of a group of objects corresponding to a group of vectors, the compute device 104 may first obtain a group of quantized representations in the partition. For example, after the partitions for the plurality of quantized representations are determined by using the foregoing clustering algorithm, quantized representations in each partition and identifiers of objects corresponding to the quantized representations can be known. In this case, the attribute values of the group of objects can be obtained based on identifiers of the group of objects corresponding to the group of quantized representations. Then, the inverted index is established based on the obtained attribute values of the group of objects. The inverted index is established by using attribute values of a plurality of objects, and offset locations of vectors including the attributes in the partition may be found by using the inverted index. In some embodiments, a process of clustering and partitioning the plurality of quantized representations of the plurality of objects and generating the inverted index corresponding to each partition may be implemented on another compute device, and the compute device 104 may receive each partition and the inverted index corresponding to each partition from the another compute device. The foregoing example is merely used to describe the present disclosure rather than a specific limitation on the present disclosure.

In some embodiments, the compute device further generates a mapping relationship for each of the multiple objects. For each of the multiple objects, the compute device may generate a mapping relationship between an identifier of the object and a partition in which a quantized representation of the object is located and an offset location in the partition. In some embodiments, when filtering the group of candidate quantized representations, the compute device 104 determines, based on the group of attribute values for the reference object, a logical operation for filtering the group of candidate quantized representations. In an example, if a to-be-found object is required to have each attribute value in the group of attribute values, a logical operation of a logical AND relationship with these attribute values needs to be constructed. In another example, if the to-be-found object is only required to have one attribute value in the group of attribute values, a logical OR operation with these attribute values needs to be constructed. In still another example, a combination operation of logical AND and logical OR may be performed on the group of attribute values based on a requirement. The foregoing example is merely used to describe the present disclosure rather than a specific limitation on the disclosure. A person skilled in the art may set, based on a requirement, a logical operation generated based on the group of attribute values.

In some embodiments, when the group of candidate quantized representations is filtered, a reference result of a target partition that corresponds to a candidate quantized representation in the group of candidate quantized representations further needs to be used. Therefore, when the group of candidate quantized representations is filtered, the target partition that corresponds to the candidate quantized representation in the group of candidate quantized representations needs to be first determined. The process is implemented by using the foregoing mapping relationship between the identifier of the object, and the partition in which the quantized representation of the object is located and the offset location in the partition. For example, for a candidate quantized representation in the group of candidate quantized representations, an identifier of an object corresponding to the candidate quantized representation needs to be first determined. Then, the identifier is used to search the foregoing mapping relationship for the target partition in which the candidate quantized representation is located and the offset location of the candidate quantized representation in the target partition. After the target partition in which the candidate quantized representation is located is determined, it is then determined whether a reference result used to filter the candidate quantized representation has been calculated for the target partition. If it is determined that the reference result has not been calculated for the target partition, the compute device 104 determines the reference result by using a logical operation and an inverted index for the target partition. A process of determining the reference result is to combine the logical operation with the inverted index for the target partition, and search the inverted index of the partition for an object that meets the logical operation formed by the group of attribute values. For example, if the group of attribute values include red and a place name, and the formed logical operation is an AND operation of red and the place name, an offset location of a quantized representation of an object having both red and the place name in the partition may be found by using the inverted index, and then which quantized representations to which objects meeting the logical operation correspond in the partition may be determined by using the offset location. Further, an offset location that meets a logical operation result is determined as the reference result. If it is determined that the reference result has been calculated for the target partition, the candidate quantized representations are filtered based on the reference result. For example, the candidate quantized representation is filtered by confirming whether the offset location of the candidate quantized representations in the partition is in the reference result. If it is determined that the candidate quantized representation does not pass filtering, the candidate quantized representation is removed from the group of candidate quantized representations. In this case, it indicates that the object corresponding to the quantized representation does not meet a requirement of the group of attribute values. If it is determined that the candidate quantized representation passes filtering, the candidate quantized representation is retained, and other candidate quantized representations in the group of candidate quantized representations are filtered in this manner.

In some embodiments, the aggregation method for generating the quantized representation index of the plurality of quantized representations of the plurality of objects is the same as the clustering method for partitioning the plurality of vectors when the inverted indexes are established, for example, both are the IVF clustering method. In this case, multiple partitions in which the group of candidate quantized representations that are located and that are searched for by using the quantized representation index and partitions to be filtered that are searched for by using the group of candidate quantized representations are same partitions. Therefore, after multiple partitions corresponding to the group of candidate quantized representations corresponding to the quantized representation of the reference object are found, each quantized representation in these partitions may be directly traversed. For each quantized representation, it is determined whether a reference result has been calculated for a partition in which the quantized representation is located. If the reference result has not been calculated, the reference result is calculated by using the logical operation formed by the group of attribute values in combination with an inverted index of the partition. If the reference result has been calculated, it is determined whether an offset location of the quantized representation is in the reference result. If the offset location of the quantized representation is in the reference result, it indicates that the quantized representation passes filtering. If the offset location of the quantized representation is not in the reference result, it indicates that the quantized representation does not pass filtering.

In some embodiments, the aggregation method for generating the quantized representation index of the plurality of quantized representations of the plurality of objects is different from the clustering method for partitioning the plurality of vectors when the inverted indexes are established. For example, the aggregation method for generating the quantized representation index is the graph aggregation algorithm, and the clustering method for partitioning the plurality of vectors when the inverted indexes are established is the IVF clustering method. The two methods result in inconsistent aggregation results obtained. In this case, after the group of candidate quantized representations corresponding to the quantized representation of the reference object is found by using the quantized representation index, for each obtained candidate quantized representation, a partition in which the candidate quantized representation is located is searched for by using an object identifier of the candidate quantized representation. After the partition is determined, it is determined whether a reference result for filtering has been calculated for the partition in which the quantized representation is located. If the reference result has not been calculated, the reference result is calculated by using the logical operation formed by the group of attribute values in combination with an inverted index of the partition. If the reference result has been calculated, it is determined whether an offset location of the quantized representation is in the reference result. If the offset location of the quantized representation is in the reference result, it indicates that the quantized representation passes filtering. If the offset location of the quantized representation is not in the reference result, it indicates that the quantized representation does not pass filtering. All partitions for which the reference result has been calculated cover the group of candidate quantized representations determined by using the quantized representation index. The foregoing example is merely used to describe the present disclosure rather than a specific limitation on the present disclosure.

At block 608, a plurality of target objects similar to the reference object are returned based on a group of filtered candidate quantized representations. As shown in FIG. 1, the compute device 104 obtains a plurality of target quantized representations from the group of filtered candidate quantized representations 116, and then returns the plurality of objects corresponding to the plurality of target quantized representations to the user.

In some embodiments, when returning the plurality of target objects similar to the reference object, the compute device 104 first determines a group of similarities between the reference quantized representation and the group of filtered candidate quantized representations. Then, the compute device 104 selects the plurality of target quantized representations from the group of filtered candidate quantized representations based on the group of similarities. Specifically, the compute device 104 sorts the group of filtered candidate quantized representations based on the group of similarities. Then, the plurality of target quantized representations are selected from a group of sorted candidate quantized representations. For example, the plurality of target quantized representations with high similarities that are ranked on top are selected. Then, the plurality of objects are obtained based on the plurality of target quantized representations.

Based on this method, the vector index is used, so that only local regions related to the plurality of quantized representations are scanned in a vector retrieval process to obtain the group of candidate quantized representations. In addition, when the vectors are filtered, only the inverted indexes of the partitions related to the local regions need to be used to calculate a reference result for filtering the vectors. As the data volume increases sharply, the foregoing operations enable only a small increase in the data volume of retrieval scanning, and a small increase in a quantity of partitions to be scanned correspondingly, thereby ensuring high-performance and low-latency retrieval in the case of a large data volume and a complex filtering condition.

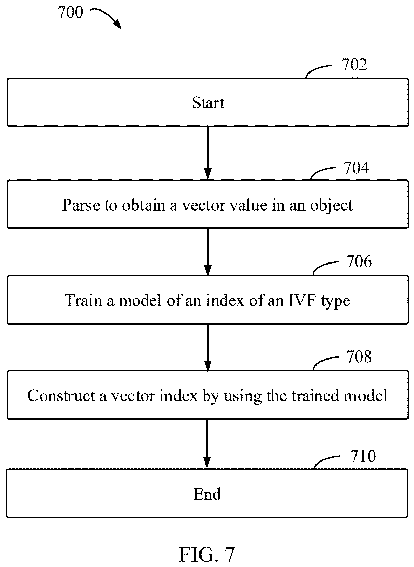

The foregoing describes, with reference to FIG. 6, a schematic flowchart for retrieving an object according to some embodiments of this application. The following describes, with reference to FIG. 7 to FIG. 10, a process of implementing high-performance vector retrieval with a filtering condition according to some embodiments of this application. First, FIG. 7 is a schematic flowchart of constructing a vector index according to some embodiments of this application. As shown in FIG. 7, the process 700 is used to construct a vector index of an IVF type. At block 702, an operation is started. At block 704, a compute device parses to obtain a vector value in an object. In an example, a vector feature of the object is extracted by processing the object. For example, an image feature of an image is extracted, and then the extracted image feature is encoded and converted into the vector feature. The foregoing example is merely used to describe the present disclosure rather than a specific limitation on the present disclosure. At block 706, a model of the index of the IVF type is trained. The model of the index of the IVF type is implemented by using a neural network model, and the neural network model may be obtained through training by using sample vector representations and sample indexes. Then, at block 708, the vector index is constructed by using the trained model. For a plurality of vectors of a plurality of objects in a retrieval library, the vector index is constructed by using the trained model. In some embodiments, the generated vector index may include partitions, and each partition has a center point vector representation. Each partition includes a plurality of vector representations. After the vector index is generated, the operation ends at block 710. Optionally, the vector index may alternatively be generated by using a graph algorithm. Additionally, the generated vector index is a region formed by points that are connected to each other based on similarities.

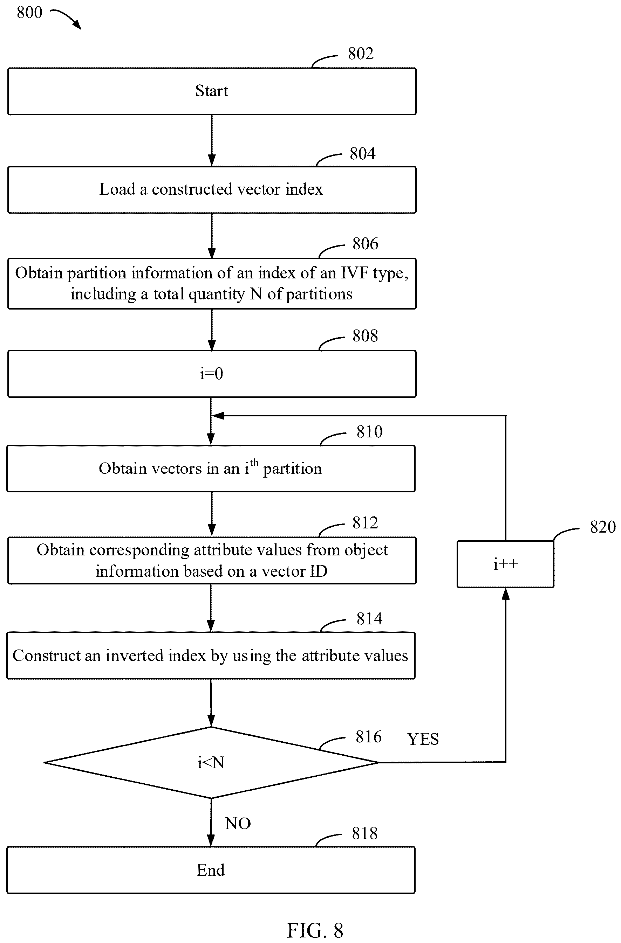

FIG. 8 is a schematic flowchart of constructing an inverted index according to some embodiments of this application. In FIG. 8, a scalar inverted index is established for each partition based on a vector index of an IVF type. An example process 800 starts at block 802. Then, at block 804, the vector index previously constructed in FIG. 7 is loaded. Then, at block 806, a compute device may obtain partition information of the index of the IVF type, including a total quantity N of partitions. Then, an inverted index is generated for each partition, and i=0 is set starting from block 808, indicating starting from the 0^{th} partition. Then, at block 810, vectors in an i^{th} partition are obtained. Then, at block 812, corresponding attribute values are obtained from object information based on a vector ID. At block 814, the inverted index is constructed by using the attribute values. At block 816, it is determined whether i<N is true, and if i<N is true, at block 820, i is incremented and the next partition continues to be calculated. If i<N is not true, the operation ends at block 818, indicating that inverted indexes have been constructed for all partitions.

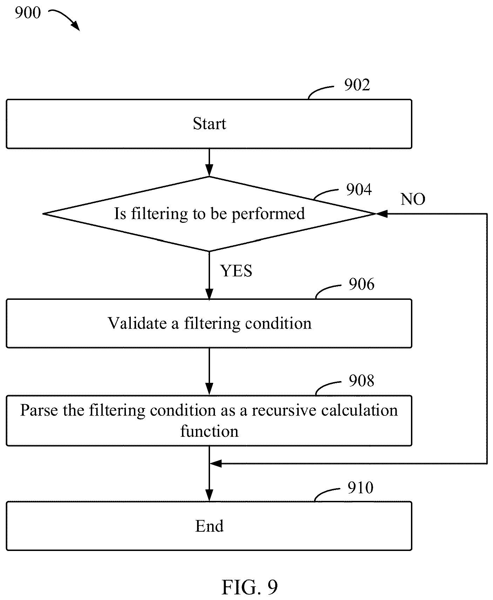

FIG. 9 is a schematic flowchart of parsing a filtering condition according to some embodiments of this application. FIG. 9 shows an attribute value filtering condition in a parsing request. Specifically, an example process 900 starts at block 902. Next, it is confirmed at block 904 whether the request requires filtering. If filtering is not required, the example process ends. If a filtering operation is required, a filtering condition is validated at block 906. For example, it is validated whether each filtering condition meets a corresponding syntax rule or whether all filtering conditions meet a matching rule. At block 908, a compute device parses the filtering condition as a recursive calculation function. For example, the recursive calculation function is a constructed logical operation of attribute values. Then, the operation ends at block 910.

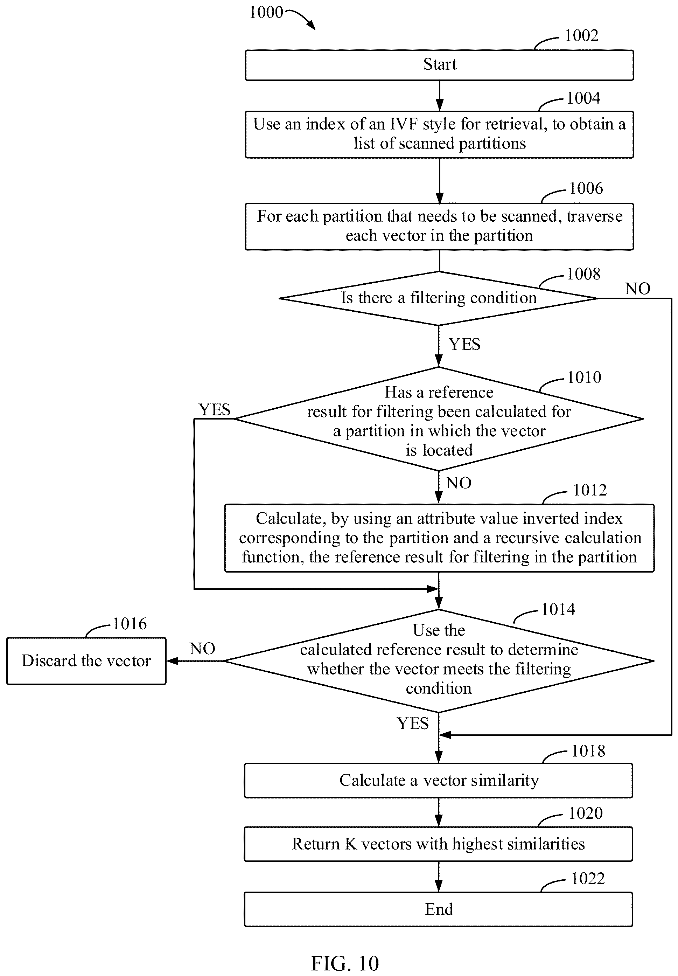

FIG. 10 is a schematic flowchart of retrieving a similar vector according to some embodiments of this application. In this process, a joint index is used to retrieve a similar vector that meets a filtering condition. The example process 1000 starts at block 1002, and then at block 1004, an index of an IVF style is used for retrieval, to obtain a list of scanned partitions. At block 1006, for each partition that needs to be scanned, each vector in the partition is traversed. Because a vector index generation method is the same as a vector partitioning method, partitions determined in the vector index are the same as partitions for calculating a filtering result. At block 1008, it is determined whether there is a filtering condition, and if there is no filtering condition, a vector similarity is calculated directly at block 1018. If there is a filtering condition, at block 1010, it is determined whether a reference result for filtering has been calculated for a partition in which the vector is located. If the reference result for filtering has been calculated for the partition in which the vector is located, the process turns to block 1014. If the reference result for filtering has not been calculated for the partition in which the vector is located, at block 1012, the reference result for filtering in the partition is calculated by using an attribute value inverted index corresponding to the partition and a recursive calculation function. At block 1014, the calculated reference result is used to determine whether the vector meets the filtering condition. If the vector does not meet the filtering condition, the vector is discarded at block 1016. If the vector meets the filtering condition, a similarity between the vector and a reference vector of an object in a search input is calculated at block 1018. Then, at block 1020, K vectors with highest similarities are returned. Finally, the process ends at block 1022.

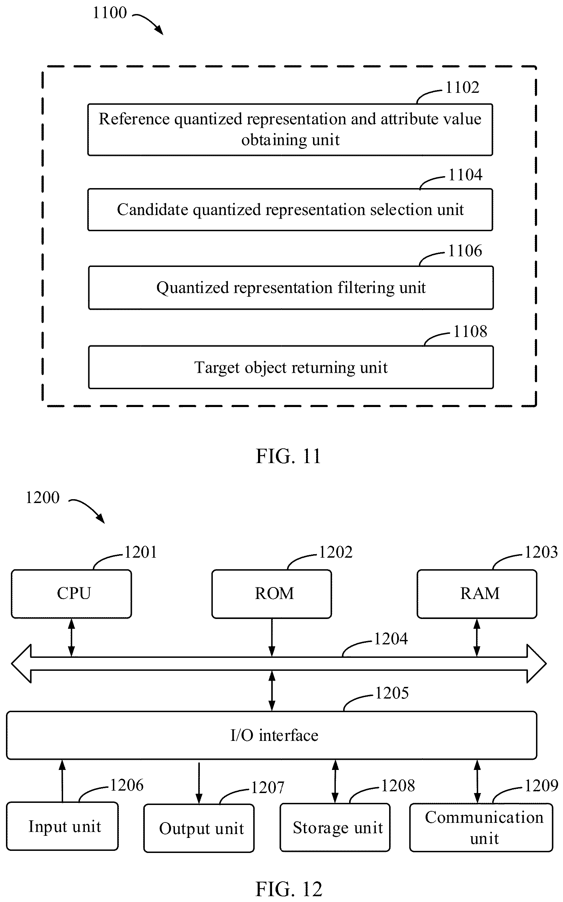

FIG. 11 further shows a block diagram of an apparatus 1100 for retrieving an object according to an embodiment of this application. The apparatus 1100 is used in a compute device, and may include a plurality of modules, to perform the corresponding steps in the process 600 discussed in FIG. 6. As shown in FIG. 11, the apparatus 1100 includes: a reference quantized representation and attribute value obtaining unit 1102, configured to obtain a reference quantized representation for a reference object in a search input and a group of attribute values for the reference object; a candidate quantized representation selection unit 1104, configured to select a group of candidate quantized representations related to the reference quantized representation from a plurality of quantized representations based on the reference quantized representation and a quantized representation index that is generated based on the plurality of quantized representations of a plurality of objects; a quantized representation filtering unit 1106, configured to filter the group of candidate quantized representations based on the group of attribute values and a group of inverted indexes of a group of partitions that are associated with the group of candidate quantized representations and that are in multiple partitions formed by the plurality of quantized representations, where an inverted index in the group of inverted indexes is generated based on attribute values of objects corresponding to quantized representations in a corresponding partition; and a target object returning unit 1108, configured to return a plurality of target objects similar to the reference object based on a group of filtered candidate quantized representations.

In some embodiments, the candidate quantized representation selection unit 1104 includes: a similarity-based aggregation selection unit, configured to select, based on similarities between the reference quantized representation and the quantized representations in the quantized representation index, a group of similar partitions close to the reference quantized representation from similar regions formed by performing a similarity-based aggregation operation on the plurality of quantized representations; and a candidate quantized representation determining unit, configured to determine quantized representations in the group of similar partitions as the group of candidate quantized representations.

In some embodiments, the quantized representation filtering unit 1106 includes: a logical operation determining unit, configured to: determine, based on the group of attribute values, a logical operation for filtering the group of candidate quantized representations; a partition filtering determining unit, configured to: determine whether a reference result for filtering a candidate quantized representation has been calculated for a target partition that corresponds to the candidate quantized representation in the group of candidate quantized representations and that is in the group of partitions; a reference result determining unit, configured to: if it is determined that the reference result has not been generated for the target partition, determine the reference result based on the logical operation and an inverted index for the target partition; and a first filtering unit, configured to filter the candidate quantized representations based on the reference result.

In some embodiments, the quantized representation filtering unit 1106 further includes: a second filtering unit, configured to: if it is determined that the reference result has been calculated for the target partition, filter the candidate quantized representations based on the reference result.

In some embodiments, the apparatus 1100 further includes: a removal unit, configured to: if it is determined that the candidate quantized representation does not pass filtering, remove the candidate quantized representation from the group of candidate quantized representations.

In some embodiments, the target object returning unit 1108 includes: a similarity determining unit, configured to determine a group of similarities between the reference quantized representation and the group of filtered candidate quantized representations; and a unit for selecting a plurality of target quantized representations, configured to select a plurality of target quantized representations from the group of filtered candidate quantized representations based on the group of similarities.

In some embodiments, the plurality of target quantized representation selection units include: a sorting unit, configured to sort the group of filtered candidate quantized representations based on the group of similarities; and a quantized representation selection unit, configured to select the plurality of target quantized representations from a group of sorted candidate quantized representations.

In some embodiments, the apparatus 1100 further includes: a similarity-based aggregation operation unit, configured to perform a similarity-based aggregation operation on the plurality of quantized representations based on a similarity between the plurality of quantized representations; and a quantized representation index generation unit, configured to generate the quantized representation index based on a plurality of quantized representations on which similarity-based aggregation is performed.

In some embodiments, the apparatus 1100 further includes: a unit for determining multiple partitions, configured to perform a clustering operation on the plurality of quantized representations based on the similarity between the plurality of quantized representations to determine the multiple partitions; and an inverted index determining unit, configured to determine, based on a group of quantized representations in each of the multiple partitions, an inverted index of attribute values of a group of objects corresponding to the group of quantized representations.

In some embodiments, each of the multiple partitions includes an identifier of an object, a quantized representation of the object, and an offset location of the quantized representation of the object in the partition.

In some embodiments, the apparatus 1100 further includes: a mapping relationship generation unit, configured to generate, for each of the multiple objects, a mapping relationship between the identifier of the object, and the partition in which the quantized representation of the object is located and the offset location in the partition.

In some embodiments, the inverted index determining unit includes: a quantized representation obtaining unit, configured to obtain the group of quantized representations in the partition; an object attribute value obtaining unit, configured to obtain the attribute values of the group of objects based on identifiers of the group of objects corresponding to the group of quantized representations; and an inverted index establishment unit, configured to establish the inverted index based on the attribute values of the group of objects.

FIG. 12 is a block diagram of an example device 1200 that may be configured to implement embodiments of content of this application. For example, both the compute device 104 in FIG. 1 and the device 302 in FIG. 3 according to embodiments of this application may be both implemented by the example device 1200. As shown in the figure, the device 1200 includes a central processing unit (CPU) 1201, and the central processing unit 1201 may perform various proper actions and processing based on computer program instructions stored in a read-only memory (ROM) 1202 or computer program instructions loaded from a storage unit 1208 to a random access memory (RAM) 1203. The RAM 1203 may further store various programs and data required for an operation of the device 1200. The CPU 1201, the ROM 1202, and the RAM 1203 are connected to each other through a bus 1204. An input/output (I/O) interface 1205 is also connected to the bus 1204.

A plurality of components in the device 1200 are connected to the I/O interface 1205, and include: an input unit 1206, for example, a keyboard or a mouse; an output unit 1207, for example, any type of display or speaker; the storage unit 1208, for example, a magnetic disk or an optical disc; and a communication unit 1209, for example, a network adapter, a modem, or a wireless communication transceiver. The communication unit 1209 enables the device 1200 to exchange information/data with another device by using a computer network, for example, the Internet, and/or various telecommunication networks.

The processes and processing described above, such as the methods 600, 700, 800, 900, and 1000, may be performed by the processing unit 1201. For example, in some embodiments, the methods 600, 700, 800, 900, and 1000 may be implemented as computer software programs, which are tangibly included in a machine-readable medium, for example, the storage unit 1208. In some embodiments, some or all of the computer programs may be loaded and/or installed on the device 1200 by using the ROM 1202 and/or the communication unit 1209. When a computer program is loaded onto the RAM 1203 and executed by the CPU 1201, one or more actions of the methods 600, 700, 800, 900, and 1000 described above may be performed.

This application may be a method, an apparatus, a system, a chip, and/or a computer program product. The chip may include a processing unit and a communication interface, and the processing unit may process a program instruction received from the communication interface. The computer program product may include a computer-readable storage medium, having computer-readable program instructions thereon for performing various aspects of this application.

The computer-readable storage medium may be a tangible device that may retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (a non-exhaustive list) of the computer-readable storage media include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoded device such as a punched card or a groove protrusion structure storing instructions on the punched card or the groove protrusion structure, and any suitable combination thereof. The computer-readable storage medium used herein is not to be construed as a transient signal, such as a radio wave or another freely propagating electromagnetic wave, an electromagnetic wave propagating through a waveguide or another transmission medium (such as a light pulse through an optical fiber), or an electrical signal transmitted through a wire.

The computer-readable program instructions described herein may be downloaded from the computer-readable storage medium to respective compute/processing devices or to an external computer or external storage device through a network such as the Internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each compute/processing device receives the computer-readable program instructions from the network and forwards the computer-readable program instructions for storage in a computer-readable storage medium in each compute/processing device.

The computer program instructions used to perform operations in this application may be an assembly instruction, an instruction set architecture (ISA) instruction, a machine instruction, a machine-related instruction, microcode, a firmware instruction, status setting data, or source code or target code written in any combination of one or more programming languages. The programming languages include an object-oriented programming language such as Smalltalk and C++, and a conventional procedural programming language such as a "C" language or a similar programming language. The computer-readable program instructions may be completely executed on a user computer, partially executed on a user computer, executed as an independent software package, partially executed on a user computer and partially executed on a remote computer, or completely executed on a remote computer or server. When a remote computer is involved, the remote computer may be connected to a user computer through any type of network, including a local area network (LAN) or a wide area network (WAN), or may be connected to an external computer (for example, connected by using an Internet service provider through the Internet). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, so as to implement the various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processing unit of a general-purpose computer, a special-purpose computer, or another programmable data processing apparatus to produce a machine, so that the instructions, when executed by the processing unit of the computer or the another programmable data processing apparatus, create an apparatus for implementing functions/actions specified in one or more blocks in the flowcharts and/or block diagrams. Alternatively, these computer-readable program instructions may be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of the functions/actions specified in the one or more blocks of the flowcharts and/or block diagrams.

The computer-readable program instructions may also be loaded onto a computer, another programmable data processing apparatus, or another device, to cause a series of operational steps to be performed on the computer, the another programmable data processing apparatus, or the another device, to produce a computer-implemented process such that the instructions that are executed on the computer, the another programmable data processing apparatus, or the another device implement the functions/actions specified in one or more blocks of the flowcharts and/or block diagrams.

The flowcharts and block diagrams in the accompanying drawings show the system architecture, function, and operation of possible implementations of systems, methods, and computer program products according to a plurality of embodiments of this application. In this regard, each block in the flowcharts or block diagrams may represent a module, a program segment, or a part of an instruction, and the module, the program segment, or the part of the instruction includes one or more executable instructions for implementing a specified logical function. In some alternative implementations, functions marked in the blocks may also occur in a sequence different from that marked in the accompanying drawings. For example, two consecutive blocks may be actually executed substantially in parallel, or sometimes may be executed in a reverse order, depending on a function involved. It should also be noted that each block in the block diagrams and/or flowcharts, and the combination of the blocks in the block diagrams and/or flowcharts may be implemented by a special-purpose hardware-based system that performs a specified function or action, or may be implemented by a combination of special-purpose hardware and computer instructions.

Implementations of this application are described above. The foregoing descriptions are examples, not exhaustive, and not limited to the foregoing disclosed implementations. Many modifications and variations are apparent to a person of ordinary skill in the art without departing from the scope and spirit of the described implementations. Selection of terms used in this specification is intended to best explain implementation principles, actual application or improvements to technologies in the market, or to enable another person of ordinary skill in the art to understand the implementations disclosed in this specification.

## Claims

1. A method for searching for an object, comprising:
obtaining a reference quantized representation for a reference object in a search input and attribute values for the reference object;
selecting candidate quantized representations related to the reference quantized representation from a plurality of quantized representations based on the reference quantized representation and a quantized representation index that is generated based on the plurality of quantized representations of a plurality of objects;
filtering the candidate quantized representations based on the attribute values and inverted indexes of partitions that are associated with the candidate quantized representations and that are in multiple partitions formed by the plurality of quantized representations; and
returning a plurality of target objects similar to the reference object based on filtered candidate quantized representations.

2. The method according to claim 1, wherein selecting the group of candidate quantized representations related to the reference quantized representation from the plurality of quantized representations comprises:
selecting, based on similarities between the reference quantized representation and the quantized representations in the quantized representation index, a group of similar partitions close to the reference quantized representation from similar regions formed by performing a similarity-based aggregation operation on the plurality of quantized representations; and
determining quantized representations in the group of similar partitions as the group of candidate quantized representations.

3. The method according to claim 1, wherein filtering the group of candidate quantized representations comprises:
when a reference result has not been calculated for a target partition that corresponds to a candidate quantized representation in the candidate quantized representations and that is in the partitions, determining the reference result based on an inverted index for the target partition; and
filtering the candidate quantized representations based on the reference result.

4. The method according to claim 3, wherein filtering the group of candidate quantized representations further comprises:
if it is determined that the reference result has been calculated for the target partition, filtering the candidate quantized representations based on the reference result.

5. The method according to claim 3 or 4, further comprising:
if it is determined that the candidate quantized representation does not pass filtering, removing the candidate quantized representation from the group of candidate quantized representations.

6. The method according to claim 3 or 4, wherein returning the plurality of target objects similar to the reference object comprises:
determining a group of similarities between the reference quantized representation and the group of filtered candidate quantized representations; and
selecting a plurality of target quantized representations from the group of filtered candidate quantized representations based on the group of similarities.

7. The method according to claim 6, wherein selecting the plurality of target quantized representations from the group of filtered candidate quantized representations comprises:
sorting the group of filtered candidate quantized representations based on the group of similarities; and
selecting the plurality of target quantized representations from a group of sorted candidate quantized representations.

8. The method according to claim 1, further comprising:
performing a similarity-based aggregation operation on the plurality of quantized representations based on a similarity between the plurality of quantized representations; and
generating the quantized representation index based on a plurality of quantized representations on which similarity-based aggregation is performed.

9. The method according to claim 8, further comprising:
performing a clustering operation on the plurality of quantized representations based on the similarity between the plurality of quantized representations to determine the multiple partitions; and
determining, based on a group of quantized representations in each of the multiple partitions, an inverted index of attribute values of a group of objects corresponding to the group of quantized representations.

10. The method according to claim 9, wherein each of the multiple partitions comprises an identifier of an object, a quantized representation of the object, and an offset location of the quantized representation of the object in the partition.

11. The method according to claim 10, further comprising:
generating, for each of the multiple objects, a mapping relationship between the identifier of the object, and the partition in which the quantized representation of the object is located and the offset location in the partition.

12. The method according to claim 9, wherein determining the inverted index of the attribute values of the group of objects corresponding to the group of quantized representations comprises:
obtaining the group of quantized representations in the partition;
obtaining the attribute values of the group of objects based on identifiers of the group of objects corresponding to the group of quantized representations; and
establishing the inverted index based on the attribute values of the group of objects.

13. An apparatus for searching for an object, comprising:
a reference quantized representation and attribute value obtaining unit, configured to obtain a reference quantized representation for a reference object in a search input and a group of attribute values for the reference object;
a candidate quantized representation selection unit, configured to select a group of candidate quantized representations related to the reference quantized representation from a plurality of quantized representations based on the reference quantized representation and a quantized representation index that is generated based on the plurality of quantized representations of a plurality of objects;
a quantized representation filtering unit, configured to filter the group of candidate quantized representations based on the group of attribute values and a group of inverted indexes of a group of partitions that are associated with the group of candidate quantized representations and that are in multiple partitions formed by the plurality of quantized representations, wherein an inverted index in the group of inverted indexes is generated based on attribute values of objects corresponding to quantized representations in a corresponding partition; and
a target object returning unit, configured to return a plurality of target objects similar to the reference object based on a group of filtered candidate quantized representations.

14. An electronic device, comprising:
at least one calculation unit; and
at least one memory, wherein the at least one memory is coupled to the at least one calculation unit and stores instructions for execution by the at least one calculation unit, and when executed by the at least one calculation unit, the instructions enable the device to perform the method according to any one of claims 1 to 12.

15. A computer-readable storage medium, storing a computer program, wherein when the program is executed by a processor, the method according to any one of claims 1 to 12 is implemented.

16. A computer program product, comprising computer-executable instructions, wherein when the computer-executable instructions are executed by a processor, the method according to any one of claims 1 to 12 is implemented.
